(19) Europäisches Patentamt
European Patent Office
Office européen des brevets

(11) Numéro de publication : **0 395 483 B1**

(12) # FASCICULE DE BREVET EUROPEEN

(45) Date de publication du fascicule du brevet : **07.12.94 Bulletin 94/49**

(51) Int. Cl.$^5$ : **H04L 12/42**

(21) Numéro de dépôt : **90401089.9**

(22) Date de dépôt : **23.04.90**

(54) **Système de télécommunication en double boucle fermée.**

(30) Priorité : **24.04.89 FR 8905423**

(43) Date de publication de la demande : **31.10.90 Bulletin 90/44**

(45) Mention de la délivrance du brevet : **07.12.94 Bulletin 94/49**

(84) Etats contractants désignés : **AT BE CH DE DK ES GB GR IT LI LU NL SE**

(56) Documents cités :
**EP-A- 0 091 129**
**EP-A- 0 102 059**
**US-A- 4 648 088**
**PROCEEDINGS IEEE INTERNATIONAL CONFERENCE ON COMMUNICATIONS, Philadelphia, 13-17 juin 1982, vol. 3, pages 6C.3.1-6C.3.5, IEEE, New York, US; M. TADA et al.:"N6770 datalink - a homogenous optical loop network"**

(73) Titulaire : **COMPAGNIE D'ETUDES, DE REALISATIONS ET D'INSTALLATIONS DE SYSTEMES (CORIS)**
**2, avenue Descartes**
**F-92350 Le Plessis Robinson (FR)**

(72) Inventeur : **Corbusier, Marianne**
**4, rue Cosarde**
**F-94240 L'Hay les Roses (FR)**
Inventeur : **Figuereo, Jean-Luc**
**127 Grande Rue**
**F-92310 Sèvres (FR)**
Inventeur : **Mattenet, Jean-Claude**
**86 chemin du Moulin**
**F-91460 Marcoussis (FR)**
Inventeur : **Peyne, Thierry**
**6, rue E. Jamot**
**F-23000 Gueret (FR)**

(74) Mandataire : **Chameroy, Claude et al**
**c/o Cabinet Malemont**
**42, avenue du Président Wilson**
**F-75116 Paris (FR)**

EP 0 395 483 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un système de télécommunication en double boucle fermée, comprenant une première ligne de transmission assurant de façon unidirectionnelle la transmission des signaux dans un sens, une seconde ligne de transmission assurant de façon unidirectionnelle la transmission des signaux dans l'autre sens, et des unités de raccordement d'abonnés insérées sur ces deux lignes, chaque unité de raccordement comprenant :

- un premier module de couplage raccordé à la première ligne de transmission;
- un second module de couplage raccordé à la seconde ligne de transmission;
- un équipement de gestion ; et
- un équipement de dialogue normalement raccordé au premier module de couplage, chacun des modules de couplage comportant :
  . une chaîne d'émission ;
  . une chaîne de réception ; et
  . des moyens d'aiguillage commandés par l'équipement de gestion, lesdits moyens d'aiguillage permettant de raccorder l'équipement de dialogue :
- soit au premier module en cas de fonctionnement normal ;
- soit au second module en cas de détection d'un signal d'alarme émis par une autre unité sur la première ligne de transmission.

De tels systèmes destinés à véhiculer un multiplex temporel codé numérique, sont décrits par exemple dans le document US-A-4 648 088 ou dans le document EP-A-0 102 059 et permettent notamment de remédier à un certain nombre de défaillances, tant au niveau des lignes qu'au niveau des unités de raccordement, ou noeuds. Toutefois, aucun des systèmes décrits par ces documents ne permet de résoudre le problème des doubles-pannes. Autrement dit, lorsqu'une deuxième défaillance survient avant que la première ne soit réparée à la suite d'une intervention humaine, de tels systèmes n'assurent plus le maintien des communications entre les différents noeuds.

La présente invention a pour but principal de remédier à cet inconvénient et, pour ce faire, elle a pour objet un système de télécommunication du type susmentionné qui se caractérise essentiellement en ce que :

- lesdits moyens d'aiguillage permettent en outre de raccorder l'équipement de dialogue aux deux modules en cas d'absence de signal entrant sur la chaîne de réception de l'un ou l'autre des modules, réalisant ainsi un rebouclage des deux lignes;
- en ce que chaque module de couplage est équipé d'un relais commandé par l'équipement de gestion, ledit relais permettant d'isoler le module correspondant tout en court-circuitant la ligne de transmission à laquelle il est raccordé ;
- et en ce que ledit système de télécommunication comprend en outre au moins une unité principale coopérant avec l'équipement de gestion de chaque unité, pour assurer de façon centralisée la gestion du système en engendrant des codes d'ordre et d'interrogation permettant d'identifier si l'élément supposé défaillant du système est constitué par une chaîne d'émission, une chaîne de réception ou la ligne proprement dite.

Grâce à cet ensemble de dispositions et ainsi qu'on le verra plus clairement par la suite, il est possible, non seulement de résoudre le problème des pannes simples ou uniques, comme dans l'état antérieur de la technique, mais également de résoudre plusieurs cas de doubles-pannes, ce qui augmente évidemment la fiabilité du système.

Dans une forme de réalisation particulière de l'invention, chaque chaîne d'émission comporte un dispositif de génération d'un signal d'alarme, tandis que chaque chaîne de réception comporte un dispositif de détection de signal d'alarme et un dispositif de détection de présence ou d'absence de signal entrant, reliés tous les deux à l'équipement de gestion, la génération du signal d'alarme étant commandée :

- soit en cas de détection d'absence de signal entrant,
- soit en cas de détection d'un signal d'alarme provenant de l'unité située en amont, afin de retransmettre ledit signal d'alarme à l'unité située en aval.

Par ailleurs, chaque chaîne de réception comporte en outre un dispositif décodeur capable de générer un signal structuré exploitable par les autres unités, même en l'absence de signal entrant, tandis que chaque chaîne d'émission comporte en outre un dispositif codeur permettant d'incorporer audit signal structuré le signal d'alarme engendré par le dispositif de génération de signal d'alarme.

Ainsi, seule l'unité située immédiatement en aval de la panne détecte le dérangement, c'est-à-dire l'absence de signal entrant, tandis que les autres unités sont simplement averties du dérangement par la réception du signal d'alarme. Sous l'influence des informations fournies par le dispositif de détection de signal d'alarme et le dispositif de détection de présence ou d'absence de signal entrant, l'équipement de gestion de chaque unité reconfigure alors l'unité correspondante en conséquence, par l'intermédiaire des moyens d'aiguillage, afin de rétablir une nouvelle boucle fermée permettant à toutes les unités de dialoguer entre elles.

De préférence, les lignes de transmission sont constituées par des fibres optiques.

Dans ce cas, chaque chaîne de réception est équipée d'un dispositif de conversion du signal optique en signal électrique, tandis que chaque chaîne d'émission est équipée d'un dispositif de conversion du signal électrique en signal optique. De plus, le relais est alors constitué par un relais optique.

Il va de soi cependant que les lignes de transmission pourraient également être constituées par des fils métalliques ou même par des liaisons hertziennes.

Plusieurs formes d'exécution de l'invention sont décrites ci-après à titre d'exemples, en référence aux dessins annexés dans lesquels :

- la figure 1 est un schéma simplifié d'un système de télécommunication en double boucle fermée conforme a l'invention ;
- la figure 2 est un schéma synoptique d'une unité de raccordement d'abonné faisant partie du système selon l'invention ;
- les figures 3A à 3I représentent différents types de configuration d'une unité de raccordement conforme a l'invention ;
- la figure 4 et un schéma analogue à celui de la figure 1, illustrant le comportement du système en cas de panne unique sur une ligne de transmission ; et
- les figures 5 à 13 sont des schémas analogues illustrant le comportant du système pour d'autres types de pannes.

Le système de télécommunication représenté sur la figure 1 est du type à double boucle fermée et véhicule, de façon connue en soi, un multiplex temporel codé numérique. Autrement dit, la transmission des données s'effectue par multiplexage temporel, des trames de longueur fixe circulant en permanence dans chaque boucle.

L'une des boucles est constituée par une première ligne de transmission $L_1$, dite ligne primaire, tandis que l'autre boucle est constituée par une seconde ligne de transmission $L_2$, dite ligne secondaire. Plusieurs unités de raccordement d'abonnés telles que A, B, C et D sont insérées sur ces deux lignes $L_1$ et $L_2$.

Par ailleurs, les signaux appliqués sur la ligne primaire se déplacent dans un sens, tandis que les signaux appliqués sur la ligne secondaire se déplacent dans l'autre sens, comme représenté par des flèches sur la figure. Il s'agit donc en fait de lignes de transmission unidirectionnelles. Dans l'exemple de réalisation particulier décrit ici, ces lignes sont constituées par des fibres optiques. Il va de soi cependant que l'on pourrait également utiliser de simples fils métalliques, ou bien encore des liaisons hertziennes.

Chaque unité de raccordement comporte deux chaînes de réception, respectivement $e_1$ et $e_2$, et deux chaînes d'émission, respectivement $s_1$ et $s_2$, qui constituent les points d'entrée et de sortie pour les lignes $L_1$ et $L_2$, ainsi qu'un équipement de dialogue ED par l'intermédiaire duquel les abonnés des unités de raccordement dialoguent entre eux. Normalement, le dialogue s'effectue sur la ligne primaire $L_1$, comme représenté sur la figure. Toutefois, comme on le verra par la suite, les lignes primaire et secondaire sont parfaitement identiques et donc interchangeables.

Le cas échéant, au moins une unité principale telle que UP, ayant la même structure que les unités de raccordement, est également insérée sur les lignes $L_1$ et $L_2$. Cette unité principale permet, ainsi qu'on le verra plus clairement par la suite, d'améliorer le comportement du système en cas de double panne.

On va maintenant décrire plus en détail la structure d'une unité de raccordement, en se référant à la figure 2.

Cette unité de raccordement se compose essentiellement de deux modules de couplage $M_1$ et $M_2$, raccordés respectivement aux lignes $L_1$ et $L_2$, d'un équipement de dialogue ED et d'un équipement de gestion EG relié aux différents éléments des modules par un bus de contrôle b.

Dans chaque module $M_1$ ou $M_2$, on retrouve tout d'abord une chaîne de réception $e_1$ ou $e_2$, une chaîne d'émission $s_1$ ou $s_2$, et des moyens d'aiguillage constitués ici par des portes électroniques, respectivement $A_1$ et $B_1$ pour le module $M_1$ et $A_2$ et $B_2$ pour le module $M_2$. Ces portes sont commandées par l'équipement de gestion EG et permettent, ainsi qu'on le verra plus clairement par la suite, de relier l'équipement de dialogue ED, soit au premier module $M_1$, soit au second module $M_2$, soit encore aux deux modules simultanément.

Chaque chaîne de réception $e_1$ ou $e_2$ comprend un dispositif de décodage DECOD, capable notamment de régénérer un signal structuré en trames, même en l'absence de signal entrant, un dispositif AS de détection de présence ou d'absence de signal entrant et un dispositif de ALR détection de signal d'alarme. Les informations fournies par les deux détecteurs AS et ALR sont envoyées à l'équipement de gestion EG qui commande en conséquence les portes $A_1$, $B_1$, $A_2$, $B_2$.

Chaque chaîne d'émission $s_1$ ou $s_2$ comprend un dispositif ALE de génération d'un signal d'alarme et un dispositif de codage COD permettant notamment d'incorporer au signal structuré régénéré par le dispositif de décodage DECOD, le signal d'alarme engendré par le dispositif ALE. La génération du signal d'alarme est commandée par un dispositif de commande COM à partir des informations fournies par les deux détecteurs AS et ALR. Autrement dit, un signal d'alarme est émis chaque fois que l'on détecte une absence de signal entrant, ou chaque fois que l'on détecte un signal d'alarme provenant de l'unité située en amont, ceci afin de retransmettre ledit signal d'alarme à l'unité située en aval. On considère qu'il y a absence de signal entrant lorsque le décodeur DECOD détecte trois absences successives du mot de début de trame, et on considère que l'unité située en amont a envoyé un signal d'alarme lorsque le décodeur détecte la présence de deux signaux d'alarme dans deux trames successives.

Par ailleurs, comme les lignes $L_1$ et $L_2$ sont constituées ici par des fibres optiques, chaque chaîne de réception est précédée d'un dispositif O/E permettant de convertir le signal optique véhiculé par la ligne en un signal électrique correspondant, tandis que chaque chaîne d'émission se termine par un dispositif E/O permettant de convertir le signal électrique sortant du dispositif de codage COD en un signal optique.

Enfin, chacun des modules $M_1$ et $M_2$ est complété par un relais optique, respectivement $R_1$ et $R_2$, par l'intermédiaire duquel le module est raccordé à la ligne correspondante $L_1$ ou $L_2$. Ce relais fonctionne par défaut, par exemple en l'absence d'alimentation électrique sur le module. Il permet alors d'isoler automatiquement le module de la ligne de transmission $L_1$ ou $L_2$, tout en réalisant un court-circuit sur ladite ligne. De plus, la chaîne d'émission se trouve alors rebouclée directement sur la chaîne de réception. Le relais $R_1$ ou $R_2$ peut également être commandé directement par l'équipement de gestion EG, comme on le verra par la suite.

L'unité de raccordement qui vient d'être décrite permet, grâce aux portes $A_1$, $B_1$, $A_2$, $B_2$ et aux relais $R_1$, $R_2$ d'obtenir différents types de configuration qui vont être explicités maintenant en référence aux figures 3A à 3I.

La figure 3A représente de manière schématique l'état de fonctionnement normal. L'unité utilise alors la ligne primaire $L_1$ pour dialoguer.

Le signal entrant dans le module de couplage $M_1$ par la ligne $L_1$ est traité par la chaîne de réception $e_1$. En sortie de $e_1$, le signal est bloqué au niveau de la porte $B_1$ et il est envoyé à l'équipement de dialogue ED en passant par la porte $A_1$. En sortie de ED, le signal est bloqué au niveau de la porte $B_2$ et il est envoyé a la chaîne d'émission $s_1$ en passant par la porte $B_1$. La chaîne d'émission renvoie alors le signal en sortie sur la ligne primaire $L_1$.

Le signal entrant dans le module de couplage $M_2$ par la ligne $L_2$ est traité par la chaîne de réception $e_2$. En sortie de $e_2$, le signal est bloqué au niveau de la porte $A_2$ et il est transféré à la chaîne d'émission $s_2$ en passant par la porte $B_2$ pour être renvoyé sur la ligne secondaire $L_2$.

Ainsi, schématiquement, l'interconnexion entre les différents modules est la suivante :

e1 → ED → s1
e2 → s2

La figure 3B représente une configuration qui est exactement la symétrique de celle représentée sur la figure 3A. L'unité utilise alors la ligne secondaire $L_2$ pour dialoguer. Cette configuration et réalisée lorsque le détecteur ALR du module $M_1$ détecte la présence d'un signal d'alarme sur la ligne primaire $L_1$. Les rôles des modules de couplage $M_1$ et $M_2$ sont alors intervertis sous l'action de l'équipement de gestion EG agissant sur l'état des différentes portes $A_1$, $B_1$, $A_2$, $B_2$.

L'interconnexion entre les différents modules est ainsi la suivante :

e1 → s1
E2 → ED → s2

Dans l'état de configuration représenté sur la figure 3C, l'unité reboucle le signal provenant de la ligne primaire $L_1$ sur la ligne secondaire $L_2$, tout en continuant d' émettre sur la ligne primaire. Cette configuration est réalisée lorsque le détecteur AS du module $M_2$ détecte une absence de signal entrant sur la ligne $L_2$.

Le signal entrant dans le module de couplage $M_1$ est traité de la même manière que pour l'état de configuration représenté sur la figure 3A.

Par contre, au niveau du module de couplage $M_2$, le signal sortant de la chaîne de réception $e_2$ est bloqué au niveau des portes $A_2$ et $B_2$ sous l'action de l'équipement de gestion EG agissant sur l'état de ces portes. C'est le signal provenant de l'équipement de dialogue ED qui est transféré dans la chaîne d'émission $s_2$ en passant par la porte $B_2$ pour être renvoyé sur la ligne secondaire $L_2$.

L'interconnexion entre les différents modules est ainsi la suivante :

e1 → ED → s1
└→ s2

La figure 3D représente une configuration qui est exactement la symétrique de celle représentée sur la figure 3C. Autrement dit, l'unité reboucle le signal provenant de la ligne secondaire $L_2$ sur la ligne primaire $L_1$, tout en continuant d'émettre sur la ligne secondaire $L_2$. Cette configuration est réalisée lorsque le détecteur AS du module $M_1$ détecte une absence de signal entrant sur la ligne primaire $L_1$. Les rôles des modules $M_1$ et $M_2$ sont alors inversés sous l'action de l'équipement de gestion EG et l'interconnexion entre les modules est ainsi la suivante :

e2 → ED → s2
└→ s1

Dans la configuration représentée sur la figure 3E, l'unité reboucle le signal provenant de la ligne primaire $L_1$ sur la ligne secondaire $L_2$, sans émettre sur la ligne primaire. Cette configuration est réalisée lorsque le détecteur AS du module $M_2$ détecte une absence de signal entrant sur la ligne $L_2$, mais seulement lorsqu'une première panne est déjà intervenue sur le système et après intervention d'une unité principale ayant donné les ordres nécessaires à l'équipement de gestion EG.

La différence avec l'état de configuration représenté sur la figure 3C est qu'en sortie de l'équipement de dialogue ED, le signal est transféré uniquement dans la chaîne d'émission $s_2$ en passant par la porte $B_2$, car il est bloqué au niveau de la porte $B_1$ du module $M_1$.

L'interconnexion des différents modules est ainsi la suivante :

$$e_1 \rightarrow ED \rightarrow s_2$$

La figure 3F représente une configuration qui est exactement la symétrique de celle représentée sur la figure 3E. Autrement dit, l'unité reboucle le signal provenant de la ligne secondaire $L_2$ sur la ligne primaire $L_1$, sans émettre sur la ligne secondaire. Cette configuration est réalisée lorsque le détecteur AS du module $M_1$ détecte une absence de signal entrant sur la ligne $L_1$, et dans les mêmes conditions que précédemment. Les rôles des modules $M_1$ et $M_2$ sont alors inversés et l'interconnexion entre les modules est ainsi la suivante :

$$e_2 \rightarrow ED \rightarrow s_1$$

Dans la configuration représentée sur la figure 3G, l'unité est complètement isolée de la ligne primaire $L_1$. Cette configuration est obtenue par l'actionnement du relais $R_1$, par exemple dans le cas d'une absence d'alimentation électrique sur le module correspondant $M_1$.

Dans la configuration représentée sur la figure 3H, l'unité se trouve isolée complètement de la ligne secondaire $L_2$ par l'actionnement du relais $R_2$, tandis que dans la configuration représentée sur la figure 3I, l'unité se trouve simultanément isolée des deux lignes $L_1$ et $L_2$ par l'actionnement des deux relais $R_1$ et $R_2$.

On va maintenant expliciter le comportement du système de télécommunication conforme à l'invention, suivant différents types de pannes.

La figure 4 illustre le cas d'une panne unique intervenant sur l'une des lignes de transmission qui est a priori la ligne primaire. Cette panne se situe entre les unités B et C, et elle peut être due soit à une rupture de la ligne primaire proprement dite, comme représenté en P sur la figure, soit à une défaillance de l'émetteur $s_1$ de B, soit encore à une défaillance du récepteur $e_1$ de C. Par défaillance de l'émetteur ou du récepteur, on entend essentiellement une défaillance du composant optique E/O ou O/E.

A la suite de cette panne, l'unité C détecte une absence de signal entrant sur la ligne primaire $L_1$ et reboucle les signaux provenant de la ligne secondaire $L_2$ sur la ligne primaire $L_1$, tout en continuant d' émettre sur la ligne secondaire en direction de l'unité B, conformément au type de configuration représenté sur la figure 3D. Simultanément, l'unité C émet un signal d'alarme en direction de l'unité D sur la ligne primaire $L_1$.

Grâce à la régénération du signal structuré en trames effectuée par l'unité C, l'unité D ne perçoit pas d'absence de signal entrant sur la ligne $L_1$, mais seulement le signal d'alarme qu'elle retransmet à l'unité suivante A, et ainsi de suite jusqu'à l'unité B. Sous l'action de ce signal d'alarme, les unités D, A et B passent sur la ligne secondaire $L_2$, conformément à l'état de configuration représenté sur la figure 3B.

Ainsi, après une courte pause, tous les postes d'abonnés sont à nouveau connectés par une nouvelle boucle continue constituée par la ligne secondaire $L_2$. On voit donc en définitive qu'en cas de panne unique sur une ligne, les différentes unités utilisent simplement l'autre ligne pour dialoguer. Ceci permet notamment d'intervenir facilement sur la ligne défaillante en vue de la réparer, et plus généralement, d'assurer des opérations de maintenance sur l'une des lignes sans interrompre le service.

La figure 5 illustre le cas d'une panne unique intervenant sur les deux lignes au même endroit. Cette panne se situe entre les unités B et C, comme représenté en P sur la figure.

A la suite de cette panne, l'unité C détecte une absence de signal entrant sur la ligne primaire $L_1$ et reboucle les signaux provenant de la ligne secondaire $L_2$ sur la ligne primaire, tout en continuant d'émettre sur la ligne secondaire en direction de l'unité B, conformément au type de configuration représenté sur la figure 3D. De même, l'unité B détecte une absence de signal entrant sur la ligne secondaire $L_2$ et reboucle les signaux provenant de la ligne primaire $L_1$ sur la ligne secondaire, tout en continuant d'émettre sur la ligne primaire en direction de l'unité C, conformément au type de configuration représenté sur la figure 3C.

Simultanément, l'unité C émet un signal d'alarme sur la ligne primaire, tandis que l'unité B émet un signal d'alarme sur la ligne secondaire. Toutefois, ces signaux d'alarme n'arrivent jamais en même temps sur les unités concernées et on considère qu'une unité qui reçoit simultanément les deux signaux d'alarme ne change pas d'état. Dans l'exemple représenté sur la figure, les unités D et A sont passées sur la ligne secondaire $L_2$ sous l'action du signal d'alarme émis par l'unité C et elles restent ensuite dans cet état, malgré l'existence du signal d'alarme émis par l'unité B.

Ainsi, après une courte pause, tous les postes d'abonnés sont connectés à nouveau par une nouvelle boucle continue utilisant à la fois la ligne primaire et la ligne secondaire, avec deux points de rebouclage au niveau des unités B et C.

La figure 6 illustre le cas d'une panne totale sur une unité. Cette panne affecte l'unité C et peut être due par exemple à une défaillance de l'alimentation

électrique.

A la suite de cette panne, l'unité B détecte une absence de signal entrant sur la ligne secondaire $L_2$ et reboucle les signaux comme précédemment, conformément au type de configuration représenté sur la figure 3C. De même, l'unité D détecte une absence de signal entrant sur la ligne primaire $L_1$ et reboucle les signaux conformément au type de configuration représenté sur la figure 3D. Quant à l'unité A, elle est passée sur la ligne secondaire $L_2$ sous l'action du signal d'alarme émis sur la ligne primaire par l'unité D et reste dans cet état, malgré l'existence du signal d'alarme émis sur la ligne secondaire par l'unité B.

Ainsi, après une courte pause, tous les postes d'abonnés non défaillants sont connectés à nouveau par une nouvelle boucle continue utilisant à la fois la ligne primaire et la ligne secondaire, avec deux points de rebouclage au niveau des unités B et D.

Par ailleurs, suite à la disparition de l'alimentation électrique sur l'unité C, les relais $R_1$ et $R_2$, fonctionnant par défaut, ont été actionnés automatiquement. De ce fait, l'unité défaillante C se trouve isolée des deux lignes primaire et secondaire, tandis que deux liaisons directes relient les unités B et D.

Le système de télécommunication conforme à l'invention permet donc de retirer ou d'insérer dans le système une ou plusieurs unités, par ouverture et fermeture successive des lignes primaire et secondaire, sans interruption du service pour les postes d'abonnés non rattachés aux unités impliquées.

On va maintenant décrire le comportement du système de télécommunication selon l'invention, dans le cas où celui-ci comporte au moins une unité principale UP. Cette unité principale comprend notamment des moyens pour engendrer des codes d'ordre et d'interrogation permettant d'identifier l'élément défaillant du système. Elle peut alors assurer de façon centralisée la gestion du système et le reconfigurer au mieux afin de diminuer sa vulnérabilité en cas d'apparition d'une nouvelle pause. Cette reconfiguration du système suite à une première panne s'effectue essentiellement en agissant sur les relais d'isolement $R_1$ et $R_2$ de chaque unité concernée, par l'intermédiaire de l'équipement de gestion EG correspondant.

Les figures 7 à 9 illustrent le comportement du système dans le cas d'une panne unique sur une ligne. Cette panne intervient sur la ligne primaire et se situe par exemple entre les unités B et C. On se retrouve alors automatiquement dans l'état de configuration représenté sur la figure 4, et ce sans aucune intervention de l'unité principale, avec les différentes unités qui dialoguent entre elles en utilisant la ligne secondaire.

Comme on l'a vu plus haut, une telle panne peut être due, soit à l'émetteur $s_1$ de l'unité B, soit au récepteur $e_1$ de l'unité C, soit encore à une rupture de la ligne primaire proprement dite. Afin d'identifier l'élément défaillant du tronçon, l'unité principale UP procède de la manière suivante :

L'unité principale commence par émettre un code d'ordre en direction de l'unité B située en amont du tronçon défaillant, pour lui demander de s'isoler de la ligne primaire. Ceci est réalisé par l'actionnement du relais $R_1$ commandé par l'équipement de gestion correspondant EG. Si à la suite de cet ordre, l'unité C détecte à nouveau un signal entrant sur la ligne primaire, c'est que la panne était bien due à l'émetteur $s_1$ de l'unité B. L'unité principale maintient alors l'ordre d'isolement de l'unité B et on se retrouve dans l'état de configuration représenté sur la figure 7. La continuité de la ligne primaire est ainsi rétablie, ce qui diminue évidemment la vulnérabilité du système en cas d'apparition d'une nouvelle panne.

Dans le cas contraire, l'unité principale UP supprime l'ordre d'isolement de l'unité B et ordonne à l'unité C de s'isoler à son tour de la ligne principale. Si à la suite de cet ordre, l'unité D détecte un signal entrant, c'est que la panne était due au récepteur $e_1$ de l'unité C. L'unité principale UP maintient alors l'ordre d'isolement de l'unité C et on se retrouve dans l'état de configuration représenté sur la figure 8. La continuité de la ligne primaire est ainsi à nouveau rétablie.

Si l'unité D ne détecte pas de signal entrant, c'est que la panne est due à une rupture de la ligne primaire proprement dite. L'unité principale UP supprime alors l'ordre d'isolement de l'unité C et ordonne à l'unité B de reboucler les signaux provenant de la ligne primaire sur la ligne secondaire, conformément au type de configuration représenté sur la figure 3C. On se retrouve ainsi dans l'état de configuration représenté sur la figure 9, avec toutes les unités qui dialoguent entre elles par l'intermédiaire d'une nouvelle boucle continue utilisant à la fois la ligne primaire et la ligne secondaire, comme dans l'état de configuration représenté sur la figure 5. Cette disposition présente l'avantage, en cas d'apparition d'une nouvelle panne, de maintenir un service réduit sur le système grâce à la formation automatique de deux boucles de communication, ce qui n'est pas le cas avec l'état de configuration de la figure 4.

La figure 10 illustre le comportement du système dans le cas d'une panne totale sur une unité qui est par exemple l'unité C. On se retrouve alors automatiquement dans l'état de configuration représenté sur la figure 6, et ce sans aucune intervention de l'unité principale UP. Les différentes unités non défaillantes dialoguent entre elles en utilisant une nouvelle boucle continue formée à la fois par la ligne primaire et la ligne secondaire, avec deux points de rebouclage des signaux au niveau des unités B et D situées de part et d'autre de l'unité défaillante C. Par ailleurs, l'unité défaillante C s'est isolée de la ligne primaire et de la ligne secondaire sous l'action des relais $R_1$ et $R_2$ en établissant deux liaisons directes avec les unités rebouclées B et D.

A la suite de cette panne, l'unité principale UP envoie un code d'ordre en direction des unités B et D pour leur demander de ne plus reboucler les signaux d'une ligne sur l'autre, et donc de prendre les configurations des figures 3A ou 3B selon le cas. Le système se retrouve alors dans l'état de configuration représenté sur la figure 10. Autrement dit, la continuité des deux lignes primaire et secondaire est rétablie, ce qui diminue évidemment la vulnérabilité du système en cas d'apparition d'une nouvelle panne.

On va maintenant examiner le comportement du système dans le cas d'une deuxième panne, suite à une première panne et après intervention de l'unité principale UP.

Supposons par exemple que la première panne soit due à une défaillance du récepteur $e_1$ de l'unité C. A la suite de cette panne, et après intervention de l'unité principale UP, on se retrouve dans l'état de configuration représenté sur la figure 8. Autrement dit, toutes les unités dialoguent entre elles sur la ligne secondaire $L_2$ et la continuité de la ligne primaire $L_1$ est assurée par une liaison directe entre les unités B et D.

Supposons maintenant que la deuxième panne soit due à une rupture de la ligne primaire entre les unités A et D, comme représenté en P sur la figure 11. L'unité A détecte alors une absence de signal entrant sur la ligne primaire et reboucle automatiquement les signaux provenant de la ligne secondaire sur la ligne primaire, tout en continuant d'émettre sur la ligne secondaire en direction de l'unité D, conformément au type de configuration représenté sur la figure 3D. Les différentes unités continuent donc à dialoguer entre elles sur la ligne secondaire.

Supposons maintenant que la deuxième panne soit due à une rupture au même endroit de la ligne secondaire $L_2$, comme représenté en P sur la figure 12. L'unité D détecte alors une absence de signal entrant sur la ligne secondaire, mais comme il s'agit de la ligne sur laquelle les unités dialoguent, l'unité principale UP ordonne à cette unité D de reboucler les signaux provenant de la ligne primaire sur la ligne secondaire, sans émettre sur la ligne primaire, conformément au type de configuration représenté sur la figure 3E. De ce fait, l'unité A détecte également une absence de signal entrant sur la ligne primaire et reboucle les signaux comme précédemment, conformément au type de configuration de la figure 3D.

Ainsi, après une courte pause, toutes les unités dialoguent à nouveau par une nouvelle boucle continue utilisant à la fois la ligne primaire et la ligne secondaire, avec deux points de rebouclage au niveau des unités A et D.

Enfin, si l'on suppose maintenant que la deuxième panne est due à une rupture au même endroit des deux lignes primaire et secondaire, comme représenté en P sur la figure 13, on obtient exactement le même état de configuration que dans le cas de la figure 12. En effet, l'unité A détecte alors une absence de signal entrant sur la ligne primaire, tandis que l'unité D détecte une absence de signal entrant sur la ligne secondaire.

On voit donc en définitive que le système de télécommunication en double boucle fermée conforme à l'invention présente une très grande sécurité d'utilisation, notamment parce qu'il permet de remédier à de nombreuses pannes différentes, soit automatiquement, soit avec l'aide d'une unité principale.

## Revendications

1. Système de télécommunication en double boucle fermée, comprenant une première ligne de transmission ($L_1$) assurant de façon unidirectionnelle la transmission des signaux dans un sens, une seconde ligne de transmission ($L_2$) assurant de façon unidirectionnelle la transmission des signaux dans l'autre sens, et des unités de raccordement d'abonnés (A, B, C, D) insérées sur ces deux lignes, chaque unité de raccordement comprenant :
   - un premier module de couplage ($M_1$) raccordé à la première ligne de transmission ($L_1$) ;
   - un second module de couplage ($M_2$) raccordé à la seconde ligne de transmission ($L_2$) ;
   - un équipement de gestion (EG) ; et
   - un équipement de dialogue (ED) normalement raccordé au premier module de couplage ($M_1$), chacun des modules de couplage comportant :
     . une chaîne d'émission ($s_1$, $s_2$) ;
     . une chaîne de réception ($e_1$, $e_2$) ; et
     . des moyens d'aiguillage ($A_1$, $B_1$, $A_2$, $B_2$) commandés par l'équipement de gestion (EG),

   lesdits moyens d'aiguillage permettant de raccorder l'équipement de dialogue (ED) :
   - soit au premier module ($M_1$) en cas de fonctionnement normal ;
   - soit au second module ($M_2$) en cas de détection d'un signal d'alarme émis par une autre unité sur la première ligne de transmission ($L_1$) ;
   - caractérisé en ce que lesdits moyens d'aiguillage permettent en outre de raccorder l'équipement de dialogue aux deux modules ($M_1$, $M_2$) en cas d'absence de signal entrant sur la chaîne de réception ($e_1$, $e_2$) de l'un ou l'autre des modules ($M_1$, $M_2$), réalisant ainsi un rebouclage des deux lignes ($L_1$, $L_2$) ;
   - en ce que chaque module de couplage ($M_1$, $M_2$) est équipé d'un relais ($R_1$, $R_2$) comman-

dé par l'équipement de gestion (EG), ledit relais permettant d'isoler le module correspondant tout en court-circuitant la ligne de transmission ($L_1$, $L_2$) à laquelle il est raccordé ;

- et en ce que ledit système de télécommunication comprend en outre au moins une unité principale (UP) coopérant avec l'équipement de gestion (EG) de chaque unité (A, B, C, D), pour assurer de façon centralisée la gestion du système en engendrant des codes d'ordre et d'interrogation permettant d'identifier si l'élément supposé défaillant du système est constitué par une chaîne d'émission ($s_1$, $s_2$), une chaîne de réception ($e_1$, $e_2$) ou la ligne proprement dite ($L_1$, $L_2$).

2. Système de télécommunication selon la revendication 1, caractérisé en ce que chaque chaîne d'émission ($_{s1}$, $s_2$) comporte un dispositif de génération d'un signal d'alarme (ALE), tandis que chaque chaîne de réception ($e_1$, $e_2$) comporte un dispositif de détection de signal d'alarme (ALR) et un dispositif (AS) de détection de présence ou d'absence de signal entrant, reliés tous les deux à l'équipement de gestion (EG), la génération du signal d'alarme étant commandée :
   - soit en cas de détection d'absence de signal entrant,
   - soit en cas de détection d'un signal d'alarme provenant de l'unité située en amont, afin de retransmettre ledit signal d'alarme à l'unité située en aval.

3. Système de télécommunication selon la revendication 2, caractérisé en ce que chaque chaîne de réception ($e_1$, $e_2$) comporte en outre un dispositif décodeur (DECOD) capable de générer un signal structuré exploitable par les autres unités, même en l'absence de signal entrant, tandis que chaque chaîne d'émission ($s_1$, $s_2$) comporte en outre un dispositif codeur (COD) permettant d'incorporer audit signal structuré le signal d'alarme engendré par le dispositif de génération de signal d'alarme (ALE).

4. Système de télécommunication selon l'une quelconque des revendications 1 à 3, caractérisé en ce que l'unité principale (UP) commande successivement, par l'intermédiaire du relais correspondant ($R_1$, $R_2$), l'isolement des unités de raccordement situées en amont et en aval de l'élément supposé défaillant, et si l'élément défaillant est identifié comme étant une chaîne d'émission ($s_1$, $s_2$) ou une chaîne de réception ($e_1$, $e_2$), l'unité principale (UP) maintient l'isolement sur l'unité de raccordement comportant ledit élément défaillant afin de reconstituer deux boucles fermées.

5. Système de télécommunication selon l'une quelconque des revendications 1 à 4, caractérisé en ce que ledit relais ($R_1$, $R_2$) est un relais fonctionnant par défaut qui se déclenche automatiquement en cas d'absence d'alimentation électrique sur le module correspondant.

6. Système de télécommunication selon l'une quelconque des revendications 1 à 5, caractérisé en ce que les lignes de transmission ($L_1$, $L_2$) sont constituées par des fibres optiques.

7. Système de télécommunication selon la revendication 6, caractérisé en ce que chaque chaîne de réception ($e_1$, $e_2$) est équipée d'un dispositif (O/E) de conversion du signal optique en signal électrique, tandis que chaque chaîne d'émission est équipée d'un dispositif (E/O) de conversion du signal électrique en signal optique.

8. Système de télécommunication selon la revendication 6 ou 7, caractérisé en ce que ledit relais ($R_1$, $R_2$) est un relais optique.

9. Système de télécommunication selon l'une quelconque des revendications 1 à 5, caractérisé en ce que les lignes de transmission ($L_1$, $L_2$) sont constituées par des fils métalliques.

10. Système de télécommunication selon l'une quelconque des revendications 1 à 5, caractérisé en ce que les lignes de transmission ($L_1$, $L_2$) sont constituées par des liaisons hertziennes.

**Patentansprüche**

1. Telekommunikationssystem mit geschlossener Doppelschleife, bestehend aus einer ersten Übertragungsleitung ($L_1$), welche die einseitig gerichtete Übertragung von Signalen in einer Richtung sichert, einer zweiten Übertragungsleitung ($L_2$), welche die einseitig gerichtete Übertragung von Signalen in der anderen Richtung sichert, und Hausanschlußeinheiten (A, B, C, D), welche in die beiden Leitungen eingefügt sind, wobei jede Anschlußeinheit besteht aus:
   - einem ersten Kupplungsmodul ($M_1$), der an die erste Übertragungsleitung ($L_1$) angeschlossen ist;
   - einem zweiten Kupplungsmodul ($M_2$), der an die zweite Übertragungsleitung ($L_2$) angeschlossen ist;
   - einer Überwachungseinrichtung (EG) ; und
   - einer Dialogeinrichtung (ED), die normal mit dem ersten Kupplungsmodul ($M_1$) verbunden ist, wobei jeder der Kupplungsmoduln besteht aus;

. einer Sendekette ($s_1$, $s_2$) ;
. einer Empfangskette ($e_1$, $e_2$) ; und
. Verzweigungsmitteln ($A_1$, $B_1$, $A_2$, $B_2$), welche durch die Überwachungseinrichtung (EG) gesteuert sind,

wobei die Verzweigungsmittel einen Anschluß der Dialogeinrichtung (ED) erlauben;

- entweder an den ersten Modul ($M_1$) bei einem Normalbetrieb;
- oder an den zweiten Modul ($M_2$) bei der Entdeckung eines Alarmsignals, welches von einer anderen Einheit über die erste Übertragungsleitung ($L_1$) gesendet wird;
- dadurch gekennzeichnet, daß die Verzweigungsmittel außerdem einen Anschluß der Dialogeinrichtung an die beiden Moduln ($M_1$, $M_2$) bei Abwesenheit eines Eingangssignals an der Empfangskette ($e_1$, $e_2$) des einen oder des anderen Moduls ($M_1$, $M_2$) erlauben, sodaß dadurch eine neue Schleifenschaltung der beiden Leitungen ($L_1$, $L_2$) erhalten wird;
- daß jeder Kupplungsmodul ($M_1$, $M_2$) mit einem Relais ($R_1$, $R_2$) versehen ist, welches durch die Überwachungseinrichtung (EG) gesteuert ist, wobei das Relais eine Isolierung des gesamten entsprechenden Moduls erlaubt, indem es die Übertragungsleitung ($L_1$, $L_2$) kurzschließt, mit welchem er verbunden ist;
- und daß das Telekommunikationssystem außerdem wenigstens eine Haupteinheit (UP) aufweist, die mit der Überwachungseinrichtung (EG) jeder Einheit (A, B, C, D) zusammenwirkt, um zentralisiert die Überwachung des Systems zu sichern, indem Folge- und Abfragecodes erzeugt werden, welche die Identifizierung erlauben, ob das Element, welches für einen Fehler des Systems vermutet wird, durch eine Sendekette ($s_1$, $s_2$), eine Empfangskette ($e_1$, $e_2$) oder die eigentlich bekannte Leitung ($L_1$, $L_2$) gebildet wird.

2. Telekommunikationssystem nach Anspruch 1, dadurch gekennzeichnet, daß jede Sendekette ($s_1$, $s_2$) eine Vorrichtung zur Erzeugung eines Alarmsignals (ALE) aufweist, während jede Empfangskette ($e_1$, $e_2$) eine Vorrichtung zur Erfassung eines Alarmsignals (ALR) und eine Vorrichtung (AS) zur Erfassung der Anwesenheit oder der Abwesenheit eines Eingangssignals aufweist, welche beide mit der Überwachungseinrichtung (EG) verbunden sind, wobei die Erzeugung des Alarmsignals gesteuert wird:
   - entweder bei der Erfassung der Abwesenheit eines Eingangssignals,
   - oder bei der Erfassung eines Alarmsignals, welches von der stromauf gelegenen Einheit geliefert wird, um dieses Alarmsignal an die stromabwärts gelegene Einheit zu übermitteln.

3. Telekommunikationssystem nach Anspruch 2, dadurch gekennzeichnet, daß jede Empfangskette ($e_1$, $e_2$) außerdem eine Decodiervorrichtung (DECOD) aufweist, die ein strukturiertes Signal erzeugen kann, welches durch die anderen Einheiten selbst bei Abwesenheit eines Eingangssignals genutzt werden kann, während jede Sendekette ($s_1$, $s_2$) außerdem eine Codiervorrichtung (COD) aufweist, welche die Eingliederung des Alarmsignals, welches von der Vorrichtung zur Erzeugung eines Alarmsignals (ALE) erzeugt wurde, in dieses strukturierte Signal erlaubt.

4. Telekommunikationssystem nach einem der Ansprüche 1 bis 3, dadurch gekennzeichnet, daß die Haupteinheit (UP) unter Zwischenschaltung des entsprechenden Relais ($R_1$, $R_2$) aufeinanderfolgend die Isolierung der Anschlußeinheiten steuert, die zu dem Element stromaufwärts und stromabwärts gelegen sind, welches als fehlerhaft angesehen wird, und daß die Haupteinheit (UP) die Isolierung bei der Anschlußeinheit, welche dieses fehlerhafte Element aufweist, beibehält, wenn das fehlerhafte Element als eine Sendekette ($s_1$, $s_2$) oder eine Empfangskette ($e_1$, $e_2$) identifiziert wird, um wieder zwei geschlossene Schleifen zu bilden.

5. Telekommunikationssystem nach einem der Ansprüche 1 bis 4, dadurch gekennzeichnet, daß das Relais ($R_1$, $R_2$) ein Relais ist, welches auf einen Fehler funktioniert und sich automatisch bei Abwesenheit einer elektrischen Versorgung an dem entsprechenden Modul auskuppelt.

6. Telekommunikationssystem nach einem der Ansprüche 1 bis 5, dadurch gekennzeichnet, daß die Übertragungsleitungen ($L_1$, $L_2$) durch optische Fasern gebildet sind.

7. Telekommunikationssystem nach Anspruch 6, dadurch gekennzeichnet, daß jede Empfangskette ($e_1$, $e_2$) mit einer Vorrichtung (O/E) zur Umwandlung eines optischen Signals in ein elektrisches Signal ausgerüstet ist, während jede Empfangskette mit einer Vorrichtung (E/O) zur Umwandlung des elektrischen Signals in ein optisches Signal ausgerüstet ist.

8. Telekommunikationssystem nach Anspruch 6 oder 7, dadurch gekennzeichnet, daß das Relais ($R_1$, $R_2$) ein optisches Relais ist.

**9.** Telekommunikationssystem nach einem der Ansprüche 1 bis 5, dadurch gekennzeichnet, daß die Übertragungsleitungen ($L_1$, $L_2$) durch Metallfäden gebildet sind.

**10.** Telekommunikationssystem nach einem der Ansprüche 1 bis 5, dadurch gekennzeichnet, daß die Übertragungsleitungen ($L_1$, $L_2$) durch Richtfunkverbindungen gebildet sind.

## Claims

**1.** Double closed loop telecommunication system, comprising a first transmission line ($L_1$) unidirectionally transmitting the signals in one direction, a second transmission line ($L_2$) unidirectionally transmitting the signals in the other direction, and subscriber connection units A, B, C, D) inserted on both these lines, each connection unit comprising:

- a first coupling module ($M_1$) connected to the first transmission line ($L_1$) ;
- a second coupling module ($M_2$) connected to the second transmission line ($L_2$) ;
- management equipment (EG) ; and
- dialogue equipment (ED) normally connected to the first coupling module ($M_1$), each of the coupling modules including:
  - . a transmission chain ($s_1$, $s_2$) ;
  - . a reception chain ($e_1$, $e_2$) ; and
  - . switching means ($A_1$,$B_1$, $A_2$, $B_2$) controlled by the management equipment (EG),

the said switching means enabling the dialogue equipment (ED) to be connected:

- either to the first module ($M_1$) in the case of normal operation;
- or to the second module ($M_2$) in the case of the detection of an alarm signal transmitted by another unit over the first transmission line ($L_1$) ;
- characterised in that the said switching means also enable the dialogue equipment to be connected to the two modules ($M_1$, $M_2$) in the event of the absence of any incoming signal on the reception chain ($e_1$, $e_2$) of either of the modules ($M_1$, $M_2$), thus looping the two lines ($L_1$, $L_2$) back;
- in that each coupling module ($M_1$, $M_2$) is equipped with a relay ($R_1$, $R_2$) controlled by the management equipment (EG), the said relay enabling the corresponding module to be isolated while short-circuiting the transmission line ($L_1$, $L_2$) to which it is connected;
- and in that the said telecommunication system comprises, in addition, at least one main unit (UP) cooperating with the management equipment (EG) of each unit (A, B, C, D), in order to provide management of the system centrally by generating command and interrogation codes making it possible to identify whether the component of the system assumed to be faulty consists of a transmission chain ($s_1$, $s_2$), a reception chain ($e_1$, $e_2$) or the line ($L_1$, $L_2$) itself.

**2.** Telecommunication system according to Claim 1, characterised in that each transmission chain ($s_1$, $s_2$) includes a device for generating an alarm signal (ALE), whilst each reception chain ($e_1$, $e_2$) includes a device for detecting the alarm signal (ALR) and a device (AS) for detecting the presence or absence of an incoming signal, both being connected to the management equipment (EG), generation of the alarm signal being demanded:

- either in event of detection of the absence of an incoming signal,
- or in the event of detection of an alarm signal coming from the unit situated upstream, in order to retransmit the said alarm signal to the unit situated downstream.

**3.** Telecommunication system according to Claim 2, characterised in that each reception chain ($e_1$, $e_2$) also includes a decoding device (DECOD) capable of generating a structured signal which can be used by the other units, even in the absence of an incoming signal, whilst each transmission chain ($s_1$, $s_2$) also has a coding device (COD) enabling the alarm signal generated by the alarm signal generating device (ALE) to be incorporated into the said structured signal.

**4.** Telecommunication system according to any one of Claims 1 to 3, characterised in that the main unit (UP) successively demands, by means of the corresponding relay ($R_1$, $R_2$), the isolation of the connection units situated upstream and downstream of the component assumed to be faulty, and, if the faulty component is identified as being a transmission chain ($s_1$, $s_2$) or a reception chain ($e_1$, $e_2$), the main unit (UP) maintains the isolation on the connection unit including the said faulty component in order to reconstitute two closed loops.

**5.** Telecommunication system according to any one of Claims 1 to 4, characterised in that the said relay ($R_1$, $R_2$) is a relay functioning by default which is triggered automatically in the event of the absence of a power supply to the corresponding module.

**6.** Telecommunication system according to any one

of Claims 1 to 5, characterised in that the transmission lines ($L_1$, $L_2$) consist of optical fibres.

7. Telecommunication system according to Claim 6, characterised in that each reception chain ($e_1$, $e_2$) is equipped with a device (O/E) for converting the optical signal into an electrical signal, whilst each transmission chain is equipped with a device (E/O) for converting the electrical signal into an optical signal.

8. Telecommunication system according to Claim 6 or 7, characterised in that the said relay ($R_1$, $R_2$) is an optical relay.

9. Telecommunication system according to any one of Claims 1 to 5, characterised in that the transmission lines ($L_1$, $L_2$) consist of metal wires.

10. Telecommunication system according to any one of Claims 1 to 5, characterised in that the transmission lines ($L_1$, $L_2$) consist of radio links.

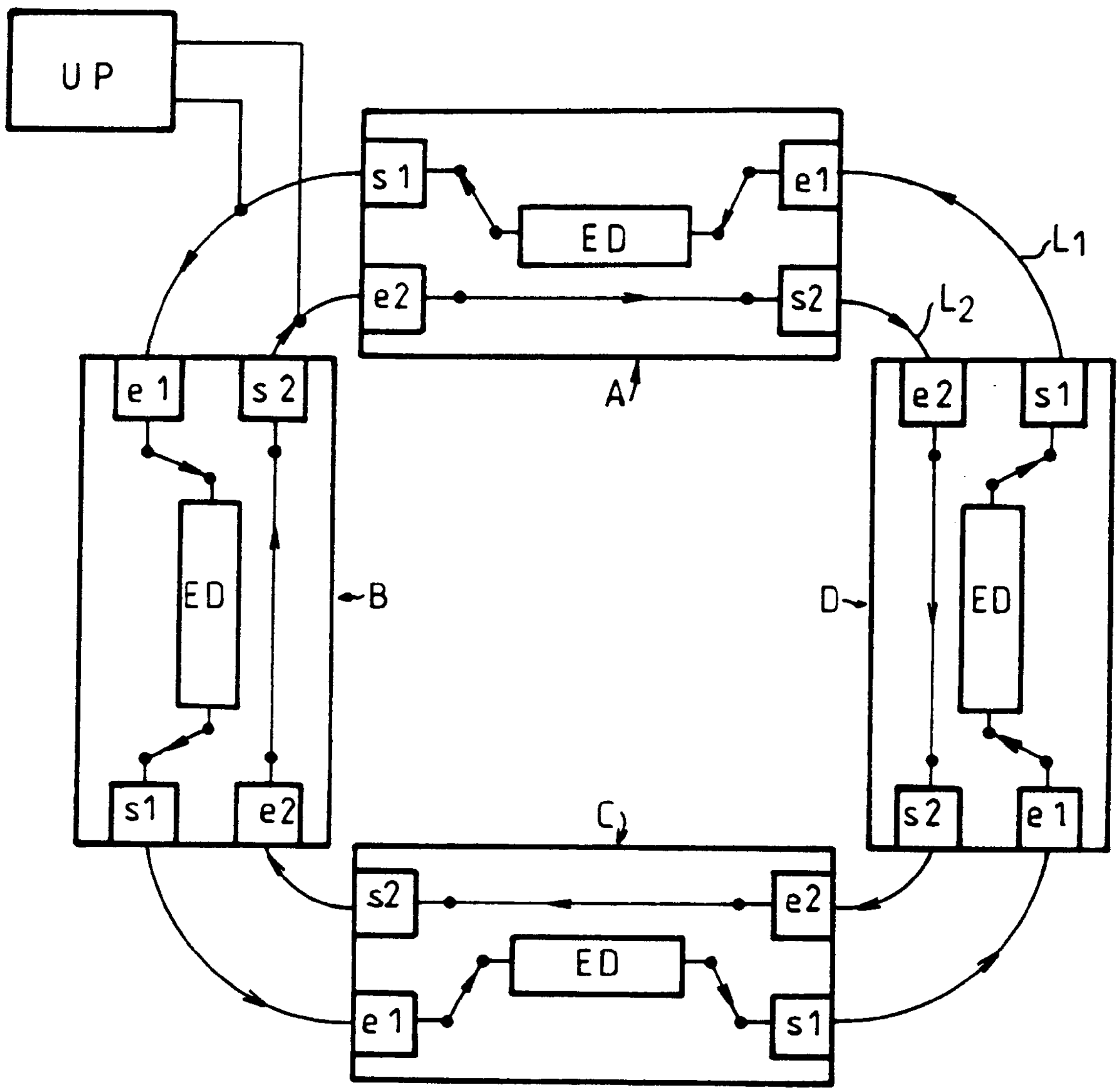
UP
s 1
e1
ED
e2
s2
L1
L2
A
e 1
s 2
ED
B
e2
s1
ED
D
s1
e2
s2
e 1
C
s2
e2
ED
e 1
s1

FIG.1

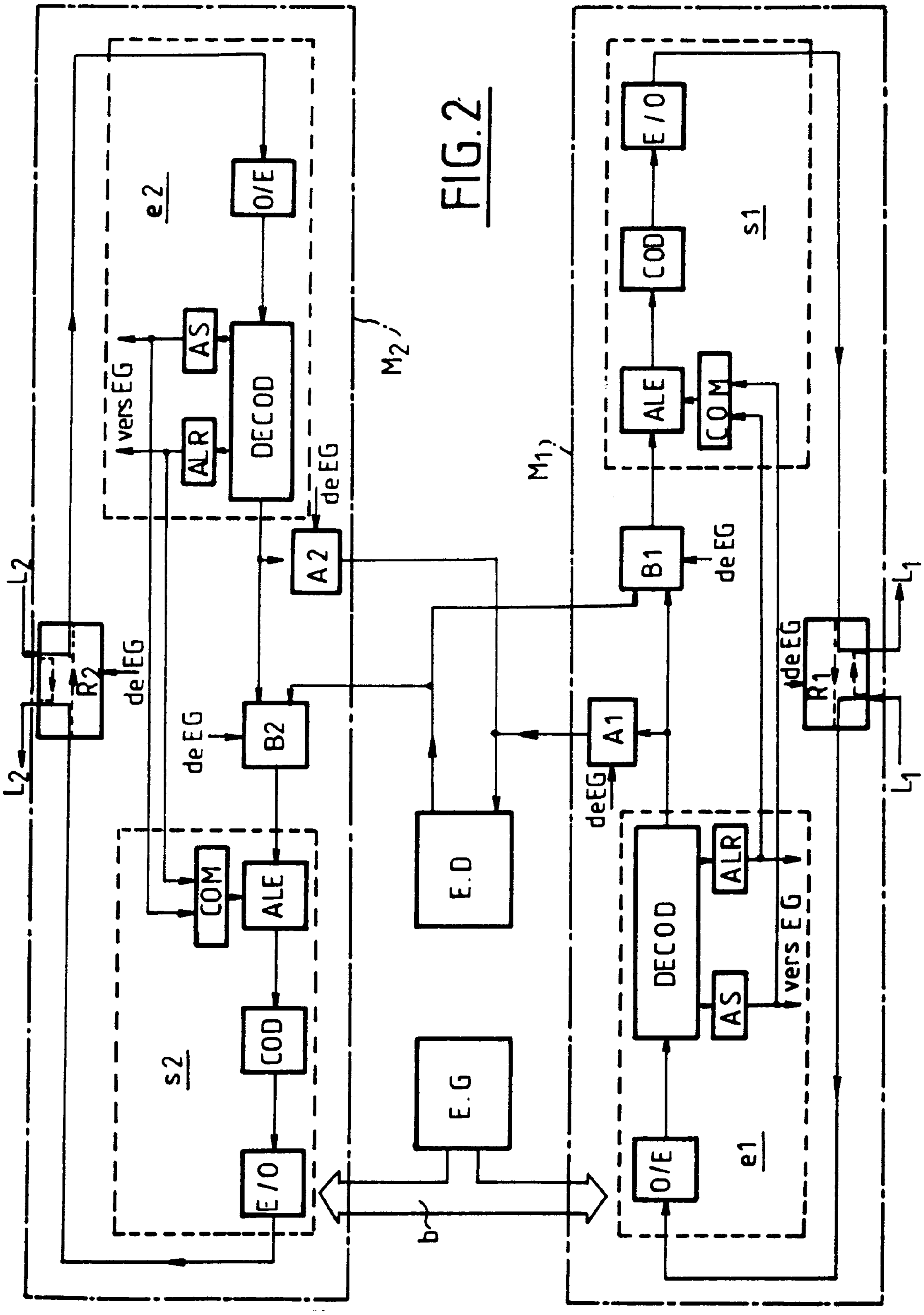
e 2
O/E
DECOD
AS
ALR
vers EG
de EG
A2
M2
L2
R2
B2
COM
ALE
COD
E/O
s2
E.D
E.G
b
M1
B1
A1
s1
e1
R1
L1

FIG. 2

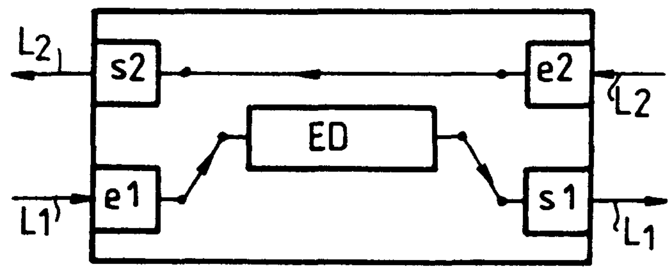


FIG.3A

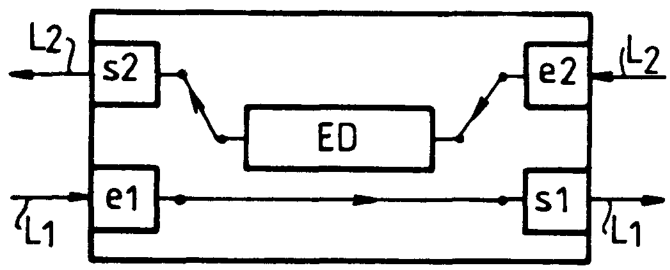


FIG.3B

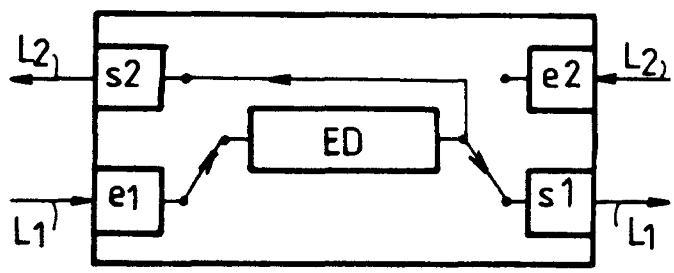


FIG.3C

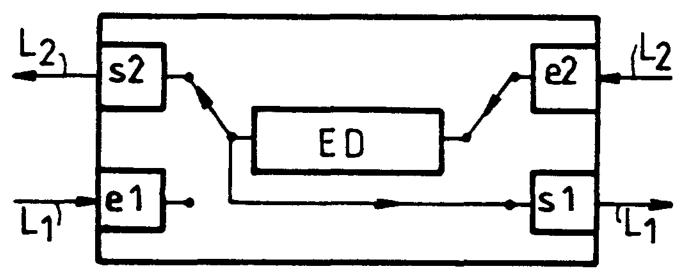


FIG.3D

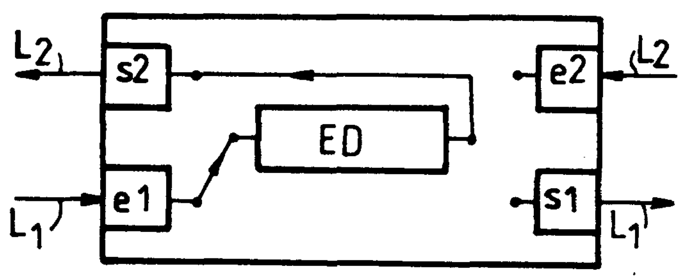


FIG.3E

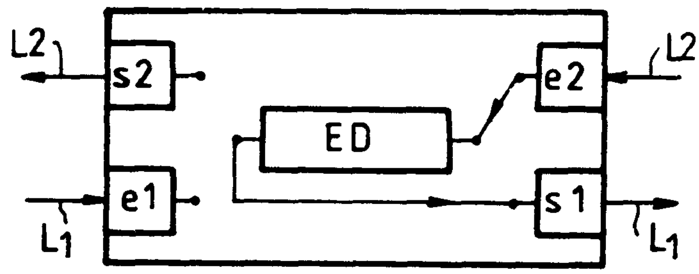


FIG.3F

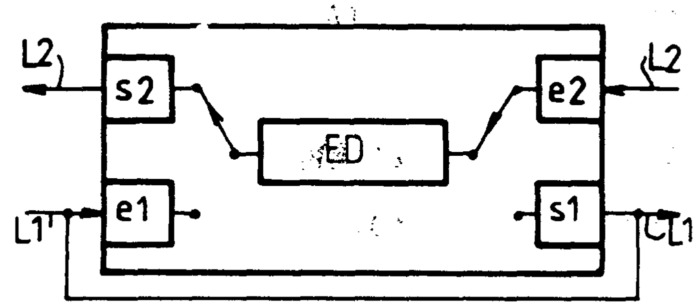


FIG.3G

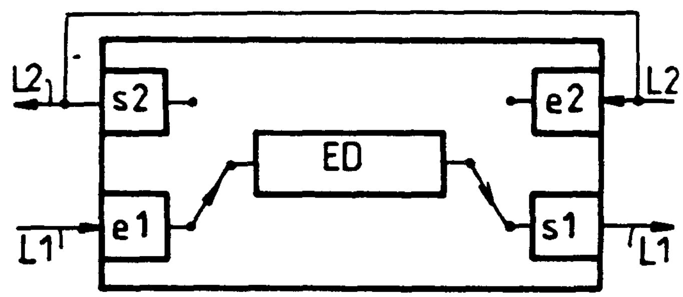


FIG.3H

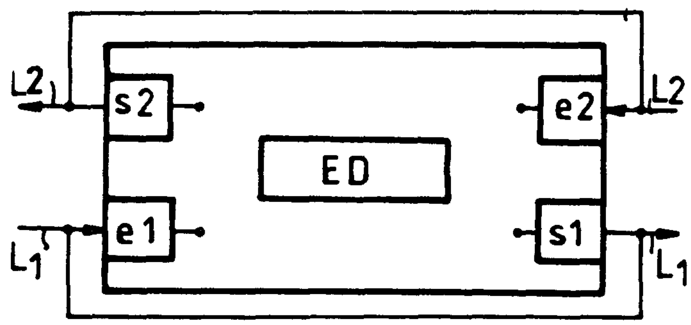


FIG.3I

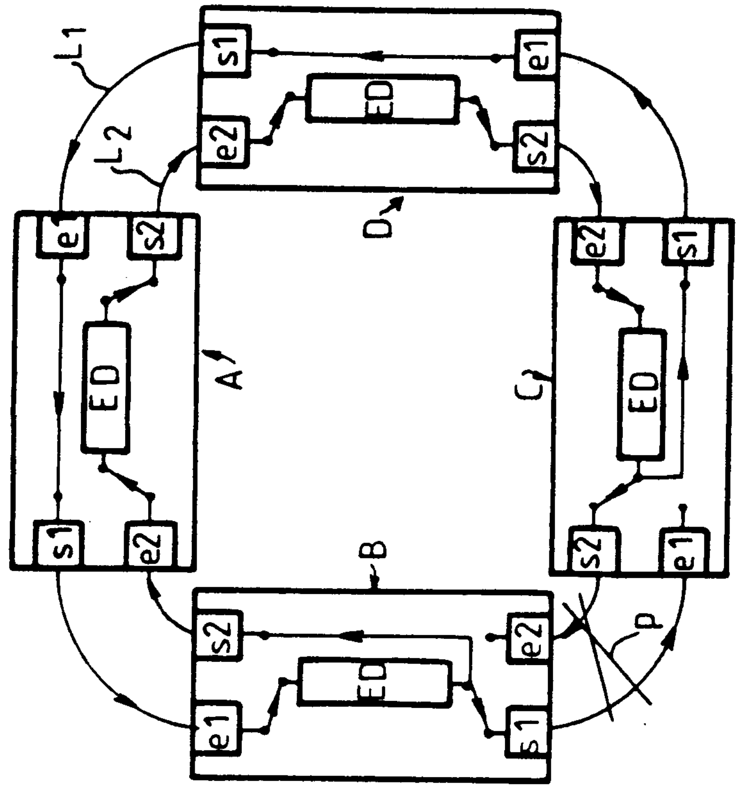


FIG.5

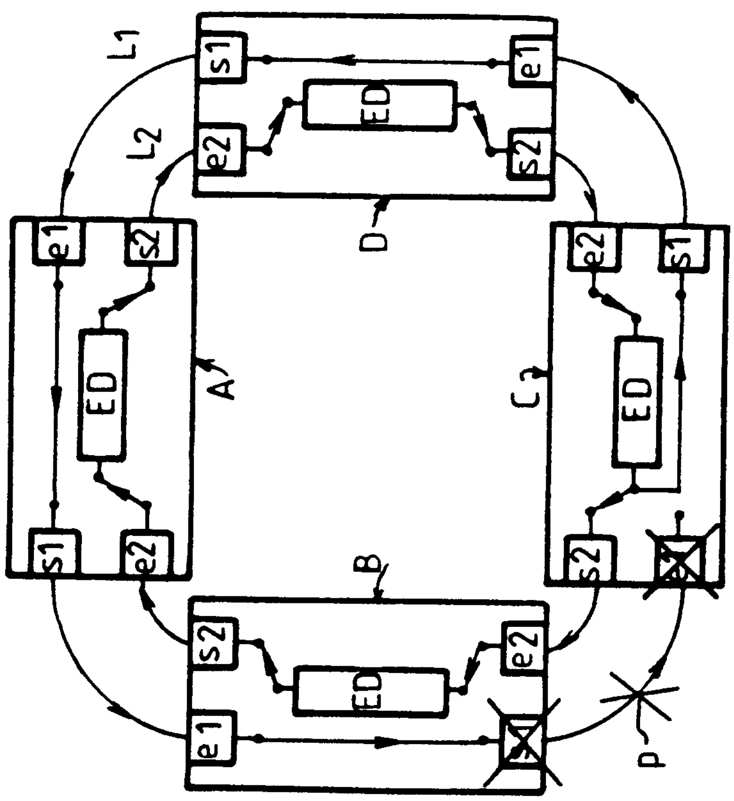


FIG. 4

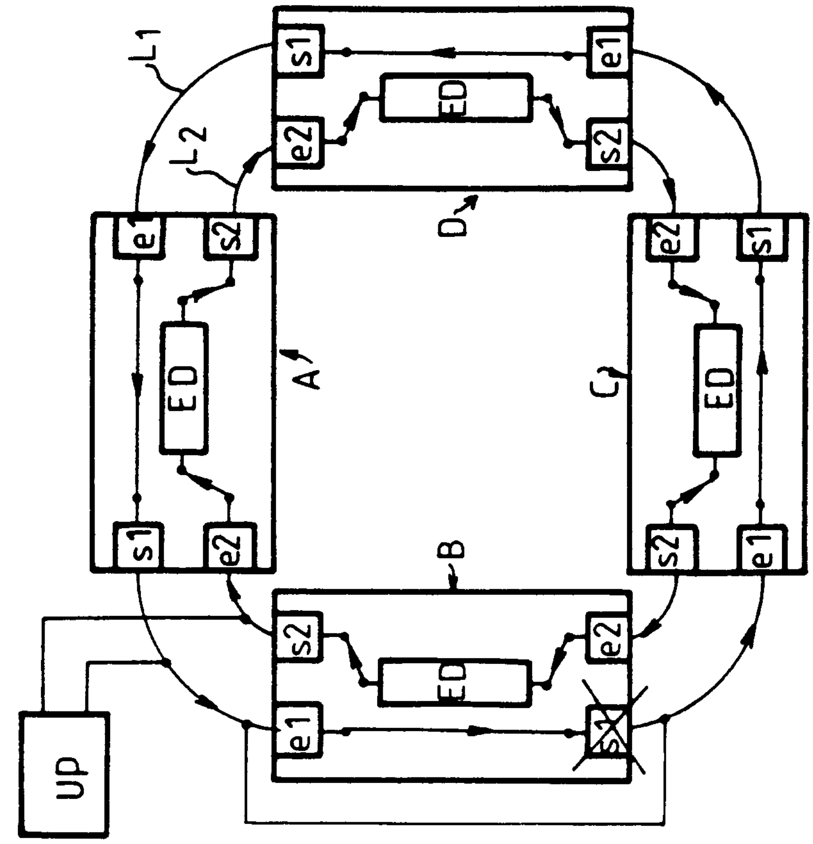


FIG. 7

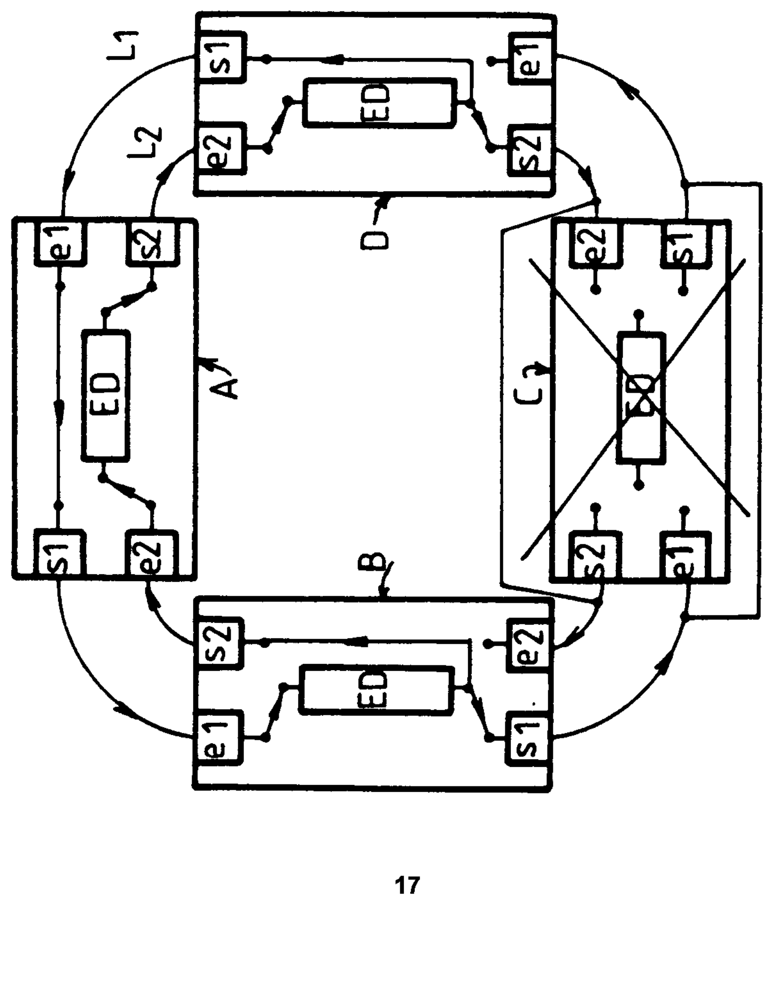


FIG.6

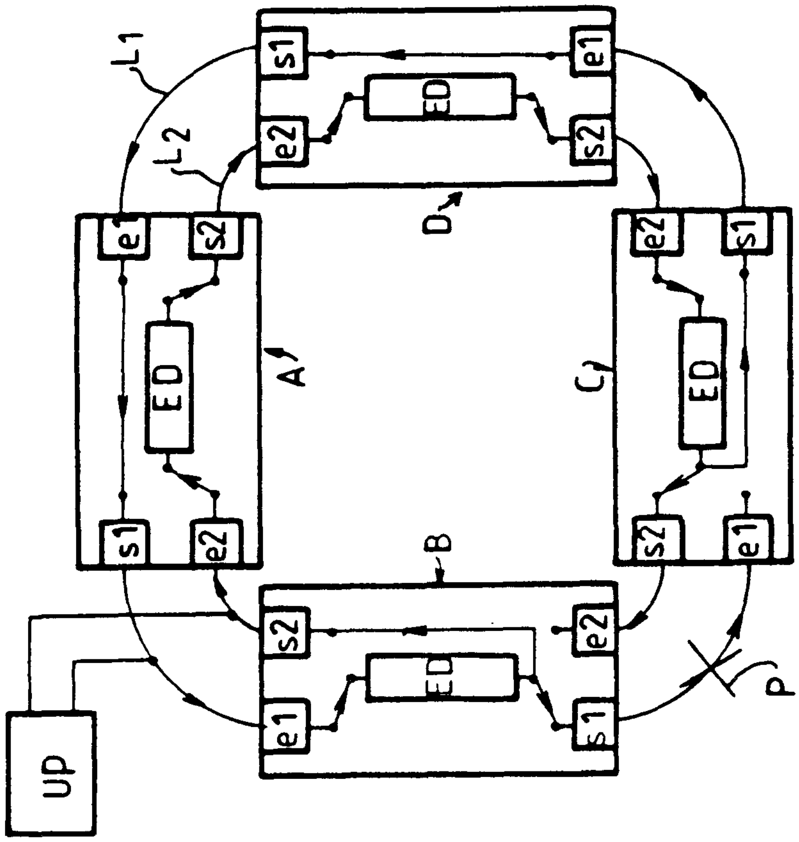


FIG. 9

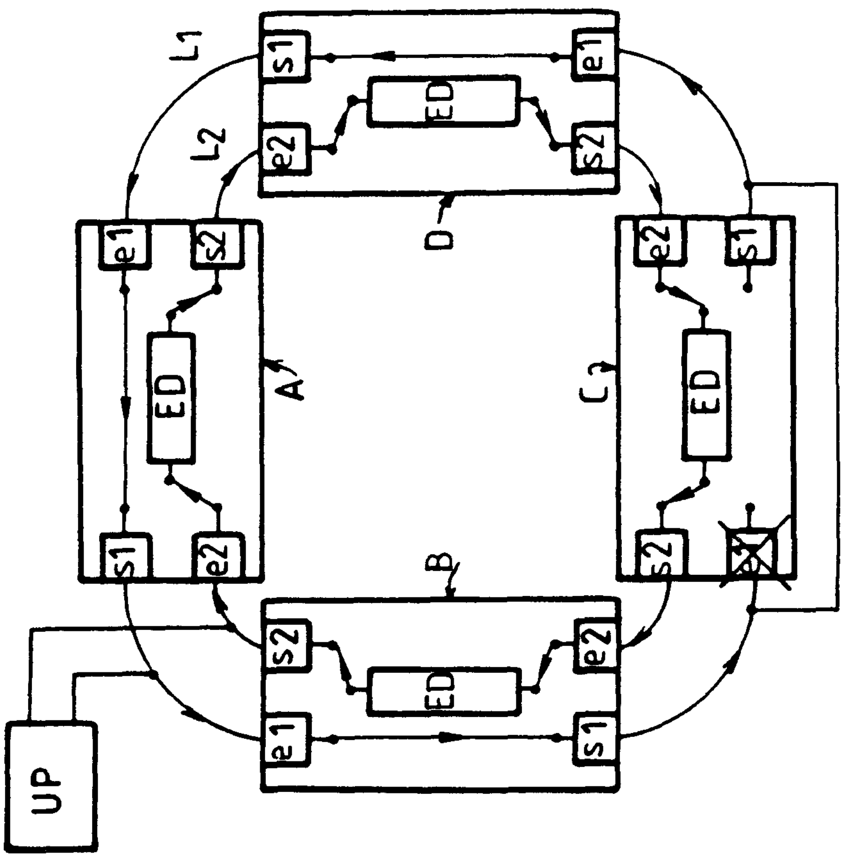


FIG. 8

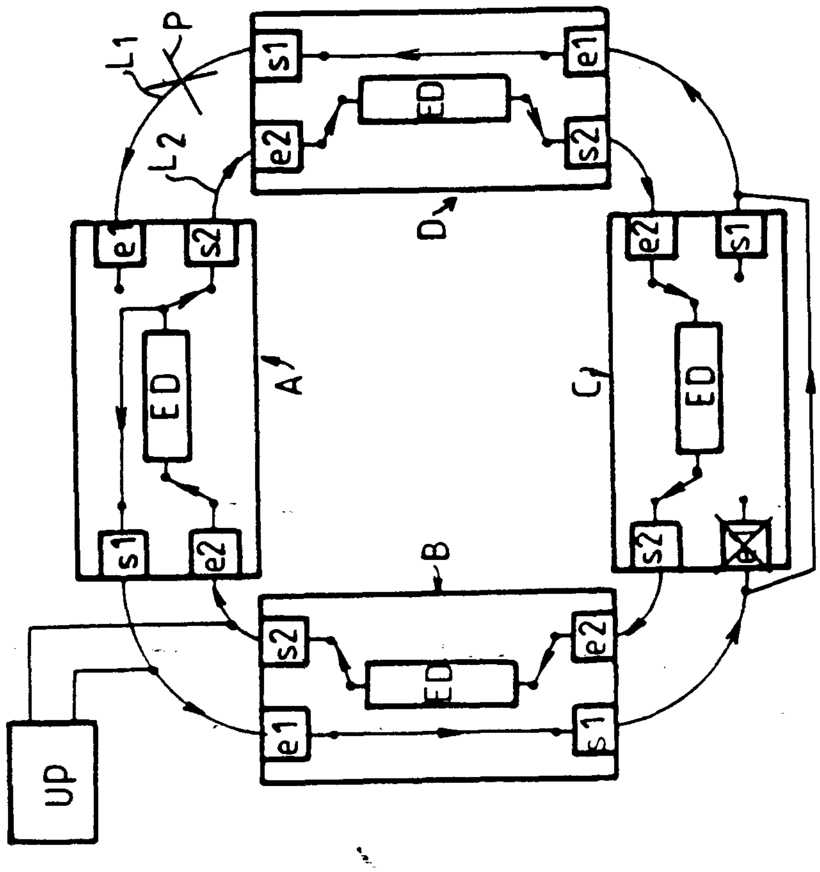
UP
ED
ED
ED
ED
A
B
C
D
L1
L2
P
e1
s1
e2
s2

FIG.11

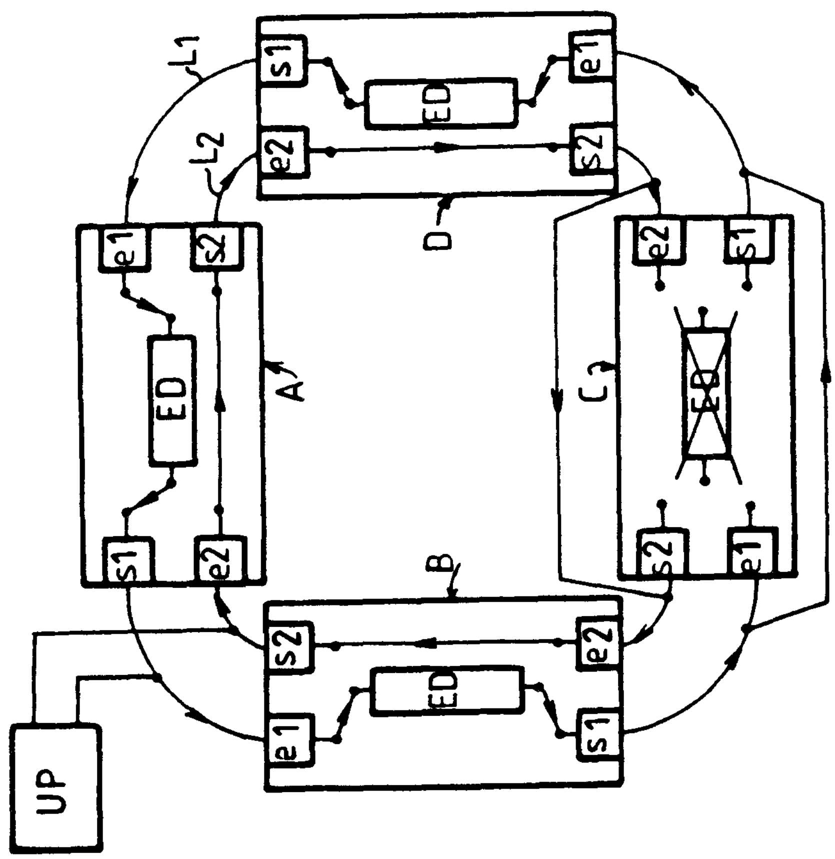
UP
ED
ED
ED
ED
A
B
C
D
L1
L2
e1
s1
e2
s2

FIG.10

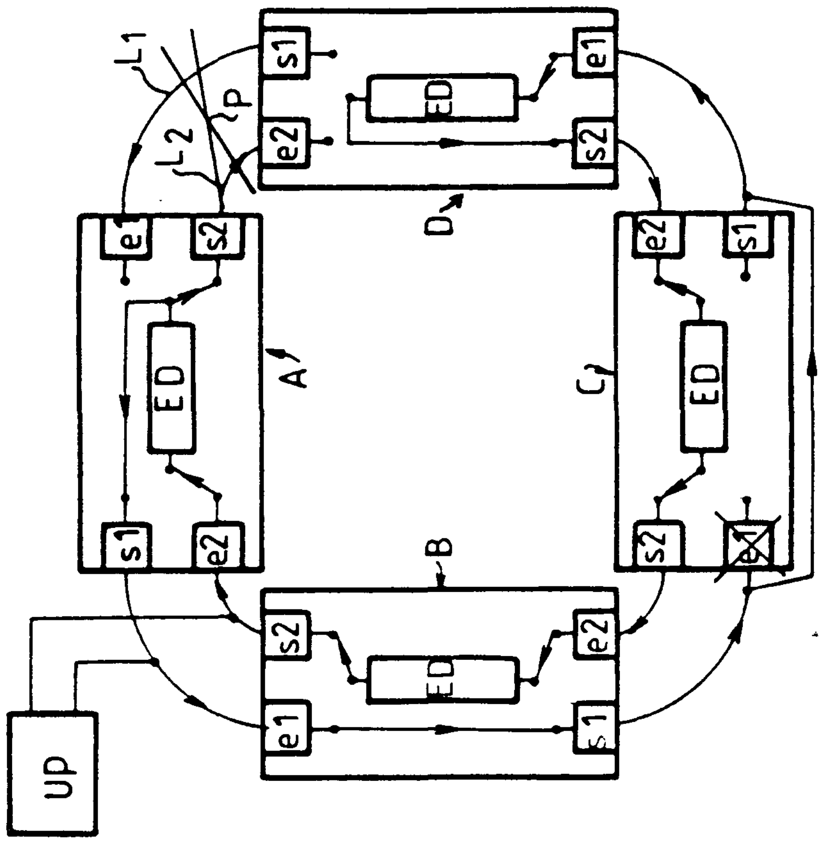


FIG.13

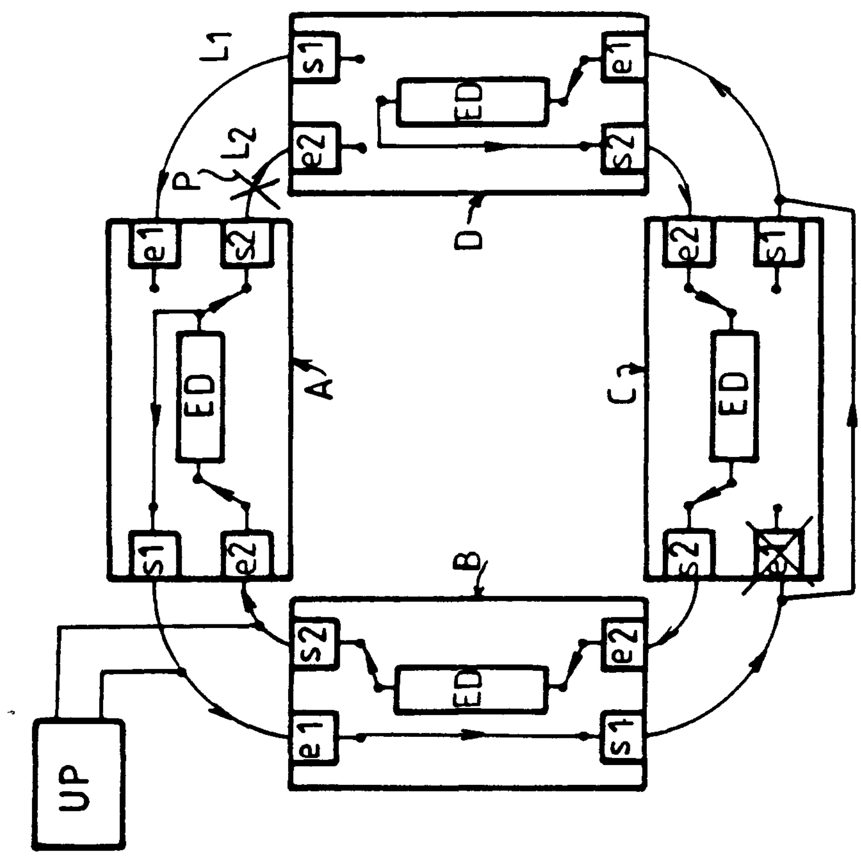


FIG.12